# EUROPÄISCHE PATENTSCHRIFT

(11) **EP 3 410 546 B1**
(45) Veröffentlichungstag und Bekanntmachung des Hinweises auf die Patenterteilung: **23.09.2020**
(21) Anmeldenummer: 18000470.7
(22) Anmeldetag: 22.05.2018
(51) Int. Cl.: H01R 43/16, B23Q 39/04

(54) **VERFAHREN ZUR HERSTELLUNG EINES KONTAKTELEMENTS FÜR EINEN STECKVERBINDER**
METHOD FOR MANUFACTURING A CONTACT ELEMENT FOR A CONNECTOR
PROCÉDÉ DE FABRICATION D'UN ÉLÉMENT DE CONTACT POUR UN CONNECTEUR ENFICHABLE

(30) Priorität: 02.06.2017 DE 102017112193
(43) Veröffentlichungstag der Anmeldung: 05.12.2018
(73) Patentinhaber: Harting Electric GmbH & Co. KG, 32339 Espelkamp (DE)
(72) Erfinder: Kölling, Heiko, 32609 Hüllhorst (DE); EPP, Artur, 32339 Espelkamp (DE); Meyrose, Timm, 32339 Espelkamp (DE)

(56) Entgegenhaltungen:
- EP-A2- 2 642 604
- EP-B1- 2 747 938
- DE-A1- 10 160 280

## Beschreibung

### Beschreibung

Die Erfindung geht aus von einen Verfahren zur Herstellung eines Kontaktelements für einen Steckverbinder nach der Gattung des unabhängigen Anspruchs 1.

Derartige Kontaktelemente werden insbesondere in schweren Steckverbinder eingesetzt. Die Kontaktelemente werden aus

Vollmaterial gefertigt und sind daher zur Übertragung hoher Ströme geeignet. Ein schwerer Steckverbinder ist beispielsweise in der WO 2016/000691 A1 gezeigt.

### Stand der Technik

Die DE 10 2014 104 406 A1 zeigt ein Kontaktelement, welches aus Vollmaterial in einem Drehverfahren hergestellt ist.

Als Fertigungsmaschinen werden so genannte Rundtaktautomaten verwendet, wie sie beispielsweise in der WO 99/43464 A2 beschrieben sind. Derartige Fertigungsmaschinen verfügen über mehrere Arbeitsstationen, die von einem Werkstück beziehungsweise einem Rohling nacheinander durchlaufen werden.

Die EP 2 642 604 A2 zeigt ein Verfahren zur Herstellung eines Kontaktelements mithilfe einer CNC-Maschine, wobei das Kontaktelement aus einem Rohling gefertigt wird, der folgende Fertigungsschritte durchläuft:
- Erzeugung eines Stiftbereichs oder eines Buchsenbereichs zur elektrischen Kontaktierung mit einem anderen Kontaktelement.
- Erzeugung eines Fixierbereichs zur Fixierung des Kontaktelements in einem Isolierkörper
- Erzeugung oder Fertigstellung eines Crimpbereichs zum elektrischen Anschluss eines Leiters an das Kontaktelement
- Entladen des fertigen Kontaktelements aus der Fertigungsmaschine.

Nachteilig ist, das derartige Herstellungsverfahren komplex und aufwendig sind und dadurch die Kontaktelemente nicht kostengünstig hergestellt werden können.

### Aufgabenstellung

Die Aufgabe der Erfindung besteht darin ein kostengünstiges Herstellungsverfahren für Kontaktelemente aus Vollmaterial herzustellen.

Die Aufgabe wird durch das gegenständliche Verfahren des unabhängigen Anspruchs 1 gelöst.

Vorteilhafte Ausgestaltungen der Erfindung sind in den Unteransprüchen angegeben.

Das erfindungsgemäße Verfahren ist zur Herstellung eines Kontaktelements mithilfe einer Rundtaktmaschine geeignet, die mindestens 24 Arbeitsstationen aufweist. Das Kontaktelement wird dabei aus einem Rohling gefertigt, der in einem Produktionszyklus mindestens 8 Arbeitsstationen auf der Rundtaktmaschine durchläuft. In diesen mindestens 8 Arbeitsstationen werden am Rohling folgende Fertigungsschritte durchgeführt, die in Summe ein fertiges Kontaktelement ergeben:
- Laden des Rohlings in die Rundtaktmaschine
- Erzeugung eines Stiftbereichs oder eines Buchsenbereichs zur elektrischen Kontaktierung mit einem anderen, gegenüberliegenden Kontaktelement
- Erzeugung eines Fixierbereichs zur Fixierung des Kontaktelements in einem Isolierkörper
- Erzeugung eines Crimpbereichs zum elektrischen Anschluss eines Leiters an das Kontaktelement bzw. eine Fertigstellung des Crimpbereichs, wenn am Rohling bereits Vorarbeiten an einer anderen Maschine erfolgt sind
- Entladen des fertigen kontaktelements aus der Rundtaktmaschine

Auf der Rundtaktmaschine werden gleichzeitig drei Produktionszyklen durchgeführt. Das bedeutet, dass auf der Rundtaktmaschine parallel jeweils drei Rohlinge zu einem Kontaktelement verarbeitet werden können. Für die Fertigung eines Kontaktelements werden jeweils ein Drittel der Arbeitsstationen benötigt.

Der Rohling hat eine im Wesentlichen zylinderförmige Grundform. Es sind auch Rohlinge mit einem tropfenförmigen Querschnitt denkbar. Vorteilhafterweise handelt es sich beim Rohling um ein Halbzeug. Der Rohling hat vor dem Laden in die Rundtaktmaschine bereits einen Bearbeitungsschritt durchlaufen. Vorzugsweise wurde bereits der äußere Durchmesser des Anschlussbereichs des Kontaktelements gedreht beziehungsweise vorgefertigt. Der vorgeschaltete Bearbeitungsschritt muss nicht an der Fertigungsmaschine für das Kontaktelement, also nicht an der Rundtaktmaschine, durchgeführt werden. Dadurch können die vorhandenen Arbeitsstationen gleichmäßig zur parallelen Fertigung dreier Kontaktelemente aufgeteilt werden.

Im Folgenden wird beschrieben wie ein Rohling auf 8 Arbeitsstationen in einem ersten Produktionszyklus hergestellt wird. Der Rohling wird verfahrenstechnisch in einen Steckbereich und einen Anschlussbereich aufgegliedert. Im Steckbereich wird am Kontaktelement der Kontaktstift oder die entsprechende Buchse ausgebildet. Im Anschlussbereich wird ein Crimpanschluss ausgebildet. Zwischen dem Kontaktstift oder der Buchse werden Fixierungsmittel gefertigt mit denen das Kontaktelement in einen Isolierkörper eines Steckverbinders fixiert werden kann. In den jeweiligen Arbeitsstationen können bis zu 3 Arbeitsschritte parallel durchgeführt werden. Die drei möglichen Arbeitsschritte werden von drei Werkzeugen, einem oberen Werkzeug O, einem unteren Werkzeug U und einem seitlich positionierten Werkzeug S, durchgeführt.

In einer ersten Arbeitsstation I werden folgende Arbeitsschritte parallel durchgeführt:
a) Der Rohling wird in die Rundtaktmaschine eingeführt. Hierzu werden druckluftbetriebene Befüllmechanismen verwendet. Der Rohling wird von einem geeigneten Greifwerkzeug ergriffen bzw. gegriffen, in eine Spannzange eingelegt und
b) der Rohling wird in die Spannzange eingeklemmt.

In einer zweiten Arbeitsstation II werden folgende Arbeitsschritte parallel durchgeführt:
a) Der Rohling wird im Steckbereich gedreht. Hierbei handelt es sich um einen spanenden Prozess bei dem Material abgetragen wird. Bei dem Drehprozess wird der Durchmesser im Steckbereich auf vorzugsweise 2,53 mm reduziert.
b) In einem parallelen Arbeitsschritt erfolgt eine Zentrierung des Rohlings an der Unterseite.

In einer dritten Arbeitsstation III werden folgende Arbeitsschritte parallel durchgeführt:
a) Der Rohling wird im Steckbereich weiter gedreht, wodurch eine weitere Reduktion des Durchmessers auf zwei unterschiedliche Durchmessermasse, vorzugsweise 1,585 mm und 2,45 mm jeweils +0,1 mm Toleranz, erfolgt.
b) Parallel dazu wird im Anschlussbereich des Rohlings axial hineingebohrt. Diese Initialbohrung stellt später die Öffnung des Kontaktelements für den Crimpanschluss dar.

In einer vierten Arbeitsstation IV werden folgende Arbeitsschritte parallel durchgeführt:
a) Der Rohling wird im Steckbereich weiter gedreht, wodurch eine einheitliche Reduktion des Durchmessers auf vorzugsweise 1,585 mm erreicht wird. Der Rohling wird gleichzeitig in.einem Grenzabschnitts zwischen Steckbereich und Anschlussbereich auf vorzugsweise 45° angefast.
b) Parallel dazu wird im Anschlussbereich des Rohlings axial hineingebohrt. Die Tiefe und/oder der Durchmesser der bereits. bestehenden Öffnung wird erweitert bzw. vergrößert.

In einer fünften Arbeitsstation V werden folgende Arbeitsschritte parallel durchgeführt:
a) Der Rohling wird im Anschlussbereich unterhalb des angefasten Grenzabschnitts gedreht, wodurch der Durchmesser hier auf vorzugsweise 1,8 mm reduziert wird.
b) Parallel dazu wird im Anschlussbereich des Rohlings axial hineingebohrt. Die Tiefe und/oder der Durchmesser der bereits bestehenden Öffnung wird erweitert bzw. vergrößert.

In einer sechsten Arbeitsstation VI werden folgende Arbeitsschritte parallel durchgeführt:
a) An dieser Position bzw. von diesem Werkzeug wird kein Bearbeitungsschritt durchgeführt.
b) Die axiale Bohrung des Rohlings wird mit einem Reibwerkzeug gerieben. Dadurch wird eine homogene Öffnung erzeugt, die die Crimpöffnung des Kontaktelements darstellt.
c) Im Anschlussbereich des Rohlings wird radial hineingebohrt. Die dadurch entstandene Öffnung dient als Entlüftungsöffnung für den Crimpbereich des Kontaktelements.

In einer siebten Arbeitsstation VII werden folgende Arbeitsschritte parallel durchgeführt:
a) Das vom Anschlussbereich entfernte Ende des Steckbereichs wird konisch umgeformt. Dieser Arbeitsschritt wird spanend durchgeführt. Dadurch wird die so genannte Kontaktspitze des Kontaktelements erzeugt. Außerdem wird eine Anschlagkontrolle bzw. eine Längenkontrolle durchgeführt. Dieser Arbeitsschritt wird in der Fachwelt auch als Kuppen bezeichnet.

In einer achten Arbeitsstation VIII werden folgende Arbeitsschritte parallel durchgeführt:
a) Die um den Rohling befindlichen Spannzange wird geöffnet und der Rohling wird entladen.
b) Der Rohling beziehungsweise das fertige Kontaktelement wird angehoben und aus der Rundtaktmaschine ausgegeben.

Vorzugsweise werden in einer zweiten Arbeitsstation I' dieselben Arbeitsschritte wie bei der ersten Arbeitsstation parallel ausgeführt.

In einer besonders bevorzugten Ausführungsform der Erfindung werden in einer dritten Arbeitsstation I" dieselben Arbeitsschritte durchgeführt, wobei lediglich die Arbeitsschritte des jeweils unteren Werkzeugs der Arbeitsstation ab der dritten Arbeitsstation versetzt sind. Im Einzelnen bedeutet dies:
In einer ersten Arbeitsstation I" werden folgende Arbeitsschritte parallel durchgeführt:
a) Der Rohling wird in die Rundtaktmaschine eingeführt. Hierzu werden druckluftbetriebene Befüllmechanismen verwendet. Der Rohling wird von einem geeigneten Greifwerkzeug ergriffen, in eine Spannzange eingelegt und
b) der Rohling wird in die Spannzange eingeklemmt.

In einer zweiten Arbeitsstation II" werden folgende Arbeitsschritte parallel durchgeführt:
a) Der Rohling wird im Steckbereich gedreht. Hierbei handelt es sich um einen spanenden Prozess bei dem Material abgetragen wird. Bei dem Drehprozess wird der Durchmesser im Steckbereich auf vorzugsweise 2,53 mm reduziert.
b) In einem parallelen Arbeitsschritt erfolgt eine Zentrierung des Rohlings.

In einer dritten Arbeitsstation III" werden folgende Arbeitsschritte parallel durchgeführt:
a) Der Rohling wird im Steckbereich weiter gedreht, wodurch eine weitere Reduktion des Durchmessers auf zwei unterschiedliche Durchmessermasse, vorzugsweise 1,585 mm und 2,45 mm jeweils +0,1 mm Toleranz, erfolgt.

In einer dritten Arbeitsstation III" werden folgende Arbeitsschritte parallel durchgeführt:
a) Der Rohling wird im Steckbereich weiter gedreht, wodurch eine weitere Reduktion des Durchmessers auf zwei unterschiedliche Durchmessermasse, vorzugsweise 1,585 mm und 2,45 mm, erfolgt.

In einer vierten Arbeitsstation IV" werden folgende Arbeitsschritte parallel durchgeführt:
a) Der Rohling wird im Steckbereich weiter gedreht, wodurch eine einheitliche Reduktion des Durchmessers auf vorzugsweise 1,585 mm erreicht wird. Der Rohling wird in einem Grenzabschnitts zwischen Steckbereich und Anschlussbereich auf vorzugsweise 45° angefast.
b) Parallel dazu wird im Anschlussbereich des Rohlings axial hineingebohrt. Diese Initialbohrung stellt später die Öffnung des Kontaktelements für den Crimpanschluss dar.

In einer fünften Arbeitsstation V" werden folgende Arbeitsschritte parallel durchgeführt:
a) Der Rohling wird im Anschlussbereich unterhalb des angefasten Grenzabschnitts gedreht, wodurch der Durchmesser hier auf vorzugsweise 1,8 mm reduziert wird.
b) Parallel dazu wird im Anschlussbereich des Rohlings axial hineingebohrt.

In einer sechsten Arbeitsstation VI" werden folgende Arbeitsschritte parallel durchgeführt:
a) Es erfolgt eine konische Umformung des vom Anschlussbereich entfernten Endes des Steckbereichs und es wird eine Anschlagkontrolle bzw. eine Längenkontrolle durchgeführt.
b) Parallel dazu wird im Anschlussbereich des Rohlings axial hineingebohrt.

In einer siebten Arbeitsstation VII' werden folgende Arbeitsschritte parallel durchgeführt:
a) An diesem Werkzeug erfolgt kein Bearbeitungsschritt.
b) Die axiale Bohrung des Rohlings wird mit einem Reibwerkzeug gerieben. Dadurch wird eine homogene Öffnung erzeugt, die die Crimpöffnung des Kontaktelements darstellt.
c) Im Anschlussbereich des Rohlings wird radial hineingebohrt. Die dadurch entstandene Öffnung dient als Entlüftungsöffnung für den Crimpbereich des Kontaktelements.

In einer achten Arbeitsstation VIII' werden folgende Arbeitsschritte parallel durchgeführt:
a) Die um den Rohling befindlichen Spannzange wird geöffnet und der Rohling wird entladen.
b) Der Rohling beziehungsweise das fertige Kontaktelement wird angehoben und aus der Rundtaktmaschine ausgegeben.

### Ausführungsbeispiel

Ein Ausführungsbeispiel der Erfindung ist in den Zeichnungen dargestellt und wird im Folgenden näher erläutert. Es zeigen:

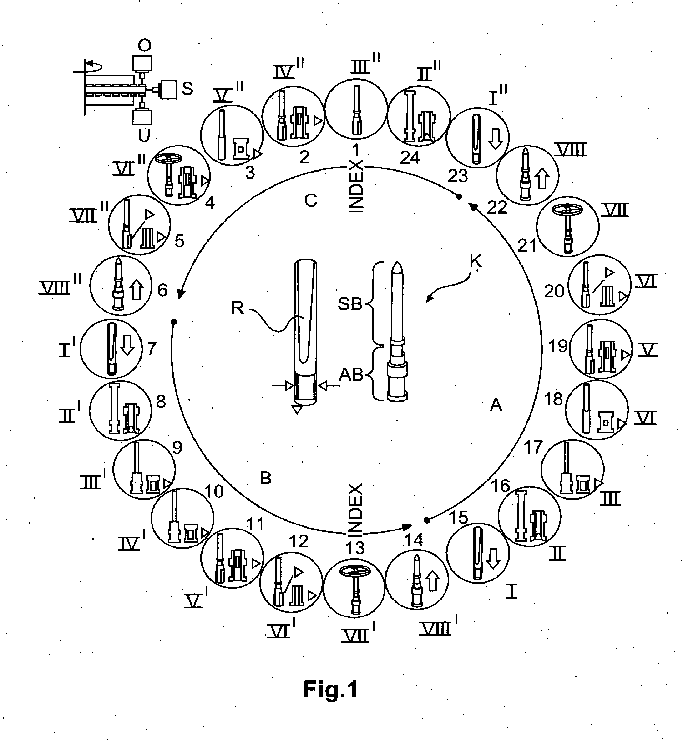

Fig. 1 Einen schematischen Produktionsplan einer Rundtaktmaschine mit 24 Arbeitsstationen.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein..

Die Figur 1 zeigt einen schematischen Produktionsplan einer Rundtaktmaschine mit 24 Arbeitsstationen. Die einzelnen Arbeitsstationen sind mit den Bezugszeichen 1-24 versehen. Die Rundtaktmaschine arbeitet parallel drei Produktionszyklen A, B und C ab. Um zu veranschaulichen, dass 8 Arbeitsstationen jeweils einen Produktionszyklus bilden, werden jeweils 8 Arbeitsstationen zusätzlich zu den arabischen Bezugszeichen mit römischen Ziffern versehen.

Der Produktionszyklus A wird mit den Arbeitsstationen 15-22 durchgeführt. Jede Arbeitsstation verfügt über drei Werkzeuge und kann daher bis zu 3 Arbeitsschritte parallel durchführen. Es gibt ein oberes Werkzeug O, ein unteres Werkzeug U und ein seitliches Werkzeug S. Das obere Werkzeug führt die mit dem Buchstaben a gekennzeichneten Bearbeitungsschritte durch, das untere Werkzeug führt die mit dem Buchstaben b gekennzeichneten Bearbeitungsschritte durch und das seitliche Werkzeug führt die mit dem Buchstaben c gekennzeichneten Bearbeitungsschritte durch.

In einer ersten Arbeitsstation I
a) wird der Rohling R in die Rundtaktmaschine eingeführt, von einem entsprechenden Greifwerkzeug ergriffen, in eine Spannzange eingelegt und
b) in die Spannzange eingeklemmt wird.

Beim Rohling R handelt es sich hier um ein so genanntes Halbzeug. Der Rohling besteht im Wesentlichen aus einem zylinderförmigen Körper einer bestimmten Länge. Im unteren Bereich wurde der Radius des Rohlings bereits reduziert. Dieser Bereich stellt später den Crimpanschluss für das fertige Kontaktelement K dar. Der Rohling wird verfahrenstechnisch in einen Steckbereich SB und einen Anschlussbereich AB aufgegliedert. Während der gesamten Verfahrensbeschreibung wird der jeweils weiterbearbeitete Rohling immer als Rohling bezeichnet. Selbstverständlich verändert der Rohling in jeder Arbeitsstation sein Aussehen bzw. seine Form.

In einer zweiten Arbeitsstation II
a) wird der Rohling R im Steckbereich, vorzugsweise auf einen Durchmesser von 2,53 mm, gedreht und
b) es erfolgt eine Zentrierung des Rohlings.

Der Durchmesser des Rohlings R wird sukzessive reduziert um letztendlich auf den endgültig gewünschten Durchmesser zu gelangen.

In einer dritten Arbeitsstation III
a) wird der Steckbereich SB des Rohlings R weiter gedreht, wodurch eine weitere Reduktion des Durchmessers auf zwei unterschiedliche Durchmessermasse, vorzugsweise 1,585 mm und 2,45 mm, erfolgt und
b) im Anschlussbereich AB des Rohlings wird axial hineingebohrt

Die axiale Bohrung stellt später die so genannte Crimpöffnung des Kontaktelements dar. Hier wird ein elektrischer Leiter eingeführt und mit einem Crimpwerkzeug festgequetscht, so dass das Kontaktelement mit dem Leiter elektrisch und mechanisch verbunden ist.

In einer vierten Arbeitsstation IV
a) wird der Rohling R im Steckbereich weiter gedreht, wodurch einheitliche Reduktion des Durchmessers auf vorzugsweise 1,585 mm erfolgt, der Rohling wird in einem Grenzabschnitts zwischen Steckbereich und Anschlussbereich auf vorzugsweise 45° angefast und
b) im Anschlussbereich des Rohlings R wird axial hineingebohrt.

In einer fünften Arbeitsstation V
a) wird der Rohling R im Anschlussbereich unterhalb des angefasten Grenzabschnitts gedreht, wodurch der Durchmesser auf vorzugsweise 1,8 mm reduziert wird und
b) im Anschlussbereich des Rohlings R wird axial hineingebohrt.

In einer sechsten Arbeitsstation VI
a) führt das obere Werkzeug keinen Arbeitsschritt durch.
b) Die axiale Bohrung des Rohlings wird mit einem Reibwerkzeug gerieben, um eine homogene Öffnung zu erzeugen und
c) im Anschlussbereich des Rohlings wird radial hineingebohrt.

In einer siebten Arbeitsstation VII
a) erfolgt eine konische Umformung des vom Anschlussbereich entfernten Endes des Steckbereichs. Parallel wird eine Anschlagkontrolle bzw. eine Längenkontrolle durchgeführt.

In diesem Arbeitsschritt wird die Kontaktspitze des Kontaktelements K erzeugt.

In einer achten Arbeitsstation VIII
a) werden die um den Rohling R befindlichen Spannzange geöffnet und der Rohling wird entladen und
b) der Rohling beziehungsweise das fertige Kontaktelement wird angehoben und aus der Rundtaktmaschine ausgegeben.

Die oben beschriebenen Fertigungsschritte der Arbeitsstationen 15-22 bzw. I bis VIII werden analog auch in einem Produktionszyklus B von den Arbeitsstationen 7-14 bzw. I' bis VIII' durchgeführt.

Auch der Produktionszyklus C erfolgt in großen Teilen analog zu den Produktionszyklen A und B. Die Fertigungsschritte der Arbeitsstationen 23-24 bzw. I" und II" des Produktionszyklus C sind identisch zu den Fertigungsschritten der Produktionszyklen A und B. Ab der Arbeitsstation III' erfolgt lediglich eine Verschiebung der Arbeitsschritte des unteren Werkzeugs U. Die Bohrungen für die Öffnung des Crimpbereichs des Kontaktelements werden von den Arbeitsstationen IV"-VII", jeweils mit dem unteren Werkzeug U, durchgeführt. In der Arbeitsstation VII" wird diese Bohrung mit einem Reibwerkzeug ausgerieben um eine homogene Öffnung zu erzielen. Parallel wird vom seitlichen Werkzeug S eine radiale Bohrung durchgeführt. Diese radiale Bohrung dient als Entlüftungsöffnung beim Crimpprozess.

Die Produktionszyklen A, B und C können an der Rundtaktmaschine parallel durchgeführt werden. An den drei Arbeitsstationen 7, 15 und 23 werden jeweils parallel Rohlinge R in die Rundtaktmaschine eingebracht und die fertigen Kontaktelemente werden an den Arbeitsstationen 6, 14 und 22 parallel ausgegeben. Dadurch kann die Maschine effizient ausgenutzt werden. Der vorgelagerte Arbeitsschritt vom Rohling zum Halbzeug erfolgt außerhalb der Rundtaktmaschine auf einer anderen Rundtaktmaschine. Müsste dieser Fertigungsschritt auch von der Rundtaktmaschine für Kontaktelemente übernommen werden, müsste 9 Arbeitsstationen je Kontaktelement verwendet werden. Dies würde dazu führen, dass nur 18 Arbeitsstationen parallel im Einsatz sind und nur zwei Kontaktelemente parallel gefertigt werden können. Durch das hier vorgeschlagene Verfahren können Kontaktelemente effizienter durch so genannte Rundtaktmaschinen gefertigt werden, was zu geringeren Fertigungskosten bzw. Herstellungskosten führt. Dadurch können steigende Materialkosten kompensiert werden.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

1-24 Arbeitsstationen
R: Rohling
K: Kontaktelement .
O: Oberes Werkzeug
U: Unteres Werkzeug
S: Seitliches Werkzeug
SB: Steckbereich
AB: Anschlussbereich

## Patentansprüche

1. Verfahren zur Herstellung eines Kontaktelements mithilfe einer Rundtaktmaschine mit folgenden Fertigungsschritten:
- Laden des Rohlings in die Rundtaktmaschine
- Erzeugung eines Stiftbereichs oder eines Buchsenbereichs zur elektrischen Kontaktierung mit einem anderen Kontaktelement
- Erzeugung eines Fixierbereichs zur Fixierung des Kontaktelements in einem Isolierkörper
- Erzeugung oder Fertigstellung eines Crimpbereichs zum elektrischen Anschluss eines Leiters an das Kontaktelement
- Entladen des fertigen Kontaktelements aus der Rundtaktmaschine
**dadurch gekennzeichnet,**
- **dass** die Rundtaktmaschine mindestens 24 Arbeitsstationen aufweist,
- **dass** das Kontaktelement aus einem Rohling (R) gefertigt wird, der in einem Produktionszyklus mindestens 8 Arbeitsstationen (I-VIII, I'-VIII', I"-VIII") auf der Rundtaktmaschine durchläuft,
- **dass** die jeweiligen Arbeitsstationen (I-VIII, I'-VIII', I"-VIII") die Summe der genannten Fertigungsschritte durchführen und
**dass** auf der Rundtaktmaschine gleichzeitig drei Produktionszyklen (A, B, C) durchgeführt werden.

2. Verfahren zur Herstellung eines Kontaktelements nach vorstehendem Anspruch, wobei es sich beim Rohling (R) um ein Halbzeug handelt, welches vor dem Laden des Rohlings (R) in die Rundtaktmaschine bereits einen Bearbeitungsschritt durchlaufen hat.

3. Verfahren zur Herstellung eines Kontaktelements nach einem der beiden vorstehenden Ansprüche,
wobei der Rohling (R) verfahrenstechnisch in einen Steckbereich (SB) und einen Anschlussbereich (AB) aufgegliedert wird,
wobei in den jeweiligen Arbeitsstationen (15-22) bis zu 3 Arbeitsschritte parallel durchgeführt werden:
In einer ersten Arbeitsstation I
a) wird der Rohling (R) in die Rundtaktmaschine eingeführt, von einem entsprechenden Greifwerkzeug ergriffen, in eine Spannzange eingelegt und
b) der Rohling (R) wird in Spannzange eingeklemmt
In einer zweiten Arbeitsstation II
a) wird der Rohling (R) im Steckbereich, vorzugsweise auf einen Durchmesser von 2,53 mm, gedreht und
b) es erfolgt eine Zentrierung des Rohlings (R)
In einer dritten Arbeitsstation III
a) wird der Steckbereich des Rohlings (R) weiter gedreht, wodurch eine weitere Reduktion des Durchmessers auf zwei unterschiedliche Durchmessermasse, vorzugsweise 1,585 mm und 2,45 mm, wobei jeweils +0,1 Aufmaß möglich ist, erfolgt und
b) im Anschlussbereich des Rohlings (R) wird axial hineingebohrt
In einer vierten Arbeitsstation IV
a) wird der Rohling (R) im Steckbereich weiter gedreht, wodurch einheitliche Reduktion des Durchmessers auf vorzugsweise 1,585 mm erfolgt, der Rohling (R) wird in einem Grenzabschnitts zwischen Steckbereich und Anschlussbereich auf vorzugsweise 45° angefast und
b) im Anschlussbereich des Rohlings (R) wird axial hineingebohrt
In einer fünften Arbeitsstation V
a) wird der Rohling (R) im Anschlussbereich unterhalb des angefasten Grenzabschnitts gedreht, wodurch der Durchmesser auf vorzugsweise 1,8 mm reduziert wird und
b) im Anschlussbereich des Rohlings (R) wird axial hineingebohrt
In einer sechsten Arbeitsstation VI
a) (kein Arbeitsschritt)
b) wird die axiale Bohrung des Rohlings (R) mit einem Reibwerkzeug gerieben, um eine homogene Öffnung zu erzeugen und
c) im Anschlussbereich des Rohlings (R) wird radial hineingebohrt
In einer siebten Arbeitsstation VII
a) erfolgt eine konische Umformung des vom Anschlussbereich entfernten Endes des Steckbereichs und es wird eine Anschlagkontrolle bzw. eine Längenkontrolle durchgeführt
In einer achten Arbeitsstation VIII
a) werden die um den Rohling (R) befindlichen Spannzange geöffnet und der Rohling wird entladen und
b) der Rohling (R) beziehungsweise das fertige Kontaktelements wird angehoben und aus der Rundtaktmaschine ausgegeben

4. Verfahren zur Herstellung eines Kontaktelements nach einem der Ansprüche 1-2,
wobei der Rohling verfahrenstechnisch in einen Steckbereich (SB) und einen Anschlussbereich (AB) aufgegliedert wird,
wobei in den jeweiligen Arbeitsstationen (7-14) bis zu 3 Arbeitsschritte parallel durchgeführt werden:
In einer ersten Arbeitsstation I'
a) wird der Rohling (R) in die Rundtaktmaschine eingeführt, von einem entsprechenden Greifwerkzeug ergriffen, in eine Spannzange eingelegt und
b) der Rohling (R) wird in Spannzange eingeklemmt
In einer zweiten Arbeitsstation II'
a) wird der Rohling im Steckbereich, vorzugsweise auf einen Durchmesser von 2,53 mm, gedreht und
b) es erfolgt eine Zentrierung des Rohlings
In einer dritten Arbeitsstation III'
a) wird der Steckbereich des Rohlings (R) weiter gedreht, wodurch eine weitere Reduktion des Durchmessers auf zwei unterschiedliche Durchmessermasse, vorzugsweise 1,585 mm und 2,45 mm, wobei jeweils +0,1 Aufmaß möglich ist, erfolgt und
b) im Anschlussbereich des Rohlings (R) wird axial hineingebohrt
In einer vierten Arbeitsstation IV'
a) wird der Rohling (R) im Steckbereich weiter gedreht, wodurch einheitliche Reduktion des Durchmessers auf vorzugsweise 1,585 mm erfolgt, der Rohling (R) wird in einem Grenzabschnitts zwischen Steckbereich und Anschlussbereich auf vorzugsweise 45° angefast und
b) im Anschlussbereich des Rohlings wird axial hineingebohrt
In einer fünften Arbeitsstation V'
a) wird der Rohling (R) im Anschlussbereich unterhalb des angefasten Grenzabschnitts gedreht, wodurch der Durchmesser auf vorzugsweise 1,8 mm reduziert wird und
b) im Anschlussbereich des Rohlings (R) wird axial hineingebohrt
In einer sechsten Arbeitsstation VI'
a) (kein Arbeitsschritt)
b) wird die axiale Bohrung des Rohlings (R) mit einem Reibwerkzeug gerieben, um eine homogene Öffnung zu erzeugen und
a) im Anschlussbereich des Rohlings (R) wird radial hineingebohrt
In einer siebten Arbeitsstation VII'
b) erfolgt eine konische Umformung des vom Anschlussbereich entfernten Endes des Steckbereichs und es wird eine Anschlagkontrolle bzw. eine Längenkontrolle durchgeführt
In einer achten Arbeitsstation VIII'
a) werden die um den Rohling (R) befindlichen Spannzange geöffnet und der Rohling wird entladen und
b) der Rohling (R) beziehungsweise das fertige Kontaktelements wird angehoben und aus der Rundtaktmaschine ausgegeben

5. Verfahren zur Herstellung eines Kontaktelements nach einem der Ansprüche 1-2,
wobei der Rohling (R) verfahrenstechnisch in einen Steckbereich (SB) und einen Anschlussbereich (AB) aufgegliedert wird,
wobei in den jeweiligen Arbeitsstationen (23-24;2-6) bis zu 3 Arbeitsschritte parallel durchgeführt werden:
In einer ersten Arbeitsstation I"
a) wird der Rohling (R) in die Rundtaktmaschine eingeführt, von einem entsprechenden Greifwerkzeug ergriffen, in eine Spannzange eingelegt und
b) der Rohling (R) wird in Spannzange eingeklemmt
In einer zweiten Arbeitsstation II"
a) wird der Rohling (R) im Steckbereich, vorzugsweise auf einen Durchmesser von 2,53 mm, gedreht und
b) es erfolgt eine Zentrierung des Rohlings (R)
In einer dritten Arbeitsstation III"
a) wird der Steckbereich des Rohlings (R) weiter gedreht, wodurch eine weitere Reduktion des Durchmessers auf zwei unterschiedliche Durchmessermasse, vorzugsweise auf 1,585 mm und auf 2,45 mm, wobei jeweils +0,1 Aufmaß möglich ist, erfolgt und
In einer vierten Arbeitsstation IV"
a) wird der Rohling (R) im Steckbereich weiter gedreht, wodurch einheitliche Reduktion des Durchmessers auf vorzugsweise 1,585 mm erfolgt, der Rohling (R) wird in einem Grenzabschnitts zwischen Steckbereich und Anschlussbereich auf vorzugsweise 45° angefast und
b) im Anschlussbereich des Rohlings (R) wird axial hineingebohrt
In einer fünften Arbeitsstation V"
a) wird der Rohling (R) im Anschlussbereich unterhalb des angefasten Grenzabschnitts gedreht, wodurch der Durchmesser auf vorzugsweise 1,8 mm reduziert wird und
b) im Anschlussbereich des Rohlings (R) wird axial hineingebohrt
In einer sechsten Arbeitsstation VI"
a) erfolgt eine konische Umformung des vom Anschlussbereich entfernten Endes des Steckbereichs und es wird eine Anschlagkontrolle bzw. eine Längenkontrolle durchgeführt
b) im Anschlussbereich des Rohlings wird axial hineingebohrt
In einer siebten Arbeitsstation VII'
a) (kein Arbeitsschritt)
b) wird die axiale Bohrung des Rohlings (R) mit einem Reibwerkzeug gerieben, um eine homogene Öffnung zu erzeugen und
c) im Anschlussbereich des Rohlings (R) wird radial hineingebohrt
In einer achten Arbeitsstation VIII'
a) werden die um den Rohling (R) befindlichen Spannzange geöffnet und der Rohling (R) wird entladen und
b) der Rohling beziehungsweise das fertige Kontaktelements wird angehoben und aus der Rundtaktmaschine ausgegeben

## Claims

1. Method for producing a contact element with the aid of a rotary indexing machine, comprising the following manufacturing steps:
- loading the blank into the rotary indexing machine,
- creating a pin region or a socket region for electrical contact-connection with another contact element,
- creating a fixing region for fixing the contact element in an insulating body,
- creating or completing a crimping region for electrically connecting a conductor to the contact element,
- unloading the complete contact element from the rotary indexing machine,
**characterized**
- **in that** the rotary indexing machine has at least 24 workstations,
- **in that** the contact element is manufactured from a blank (R) which passes through at least 8 workstations (I-VIII, I'-VIII', I''-VIII'') on the rotary indexing machine in one production cycle,
- **in that** the respective workstations (I-VIII, I'-VIII', I''-VIII'') carry out the sum of the said manufacturing steps, and
- **in that** three production cycles (A, B, C) are carried out on the rotary indexing machine at the same time.

2. Method for producing a contact element according to the preceding claim, wherein the blank (R) is a semifinished product which has already passed through one processing step before the blank (R) is loaded into the rotary indexing machine.

3. Method for producing a contact element according to one of the two preceding claims,
wherein the blank (R) is broken down into a plug region (SB) and a connection region (AB) in terms of process engineering,
wherein up to 3 working steps are carried out in parallel in the respective workstations (15-22):
in a first workstation I
a) the blank (R) is inserted into the rotary indexing machine, grasped by an appropriate gripping tool, placed into a collet and
b) the blank (R) is clamped in in the collet,
in a second workstation II
a) the blank (R) is turned in the plug region, preferably to a diameter of 2.53 mm, and
b) the blank (R) is centred,
in a third workstation III
a) the plug region of the blank (R) is further turned, as a result of which the diameter is further reduced to two different diameter dimensions, preferably 1.585 mm and 2.45 mm, wherein a tolerance of +0.1 is possible in each case, and
b) axial drilling into the connection region of the blank (R) is performed,
in a fourth workstation IV
a) the blank (R) is further turned in the plug region, as a result of which the diameter is uniformly reduced to preferably 1.585 mm, the blank (R) is bevelled to preferably 45° in a boundary section between the plug region and the connection region, and
b) axial drilling into the connection region of the blank (R) is performed,
in a fifth workstation V
a) the blank (R) is turned in the connection region below the bevelled boundary section, as a result of which the diameter is reduced to preferably 1.8 mm, and
b) axial drilling into the connection region of the blank (R) is performed,
in a sixth workstation VI
a) (no working step)
b) the axial drilled hole of the blank (R) is reamed with a reaming tool in order to create a homogeneous opening, and
c) radial drilling into the connection region of the blank (R) is performed,
in a seventh workstation VII
a) that end of the plug region which is remote from the connection region is conically reshaped and stop control or length control is carried out,
in an eighth workstation VIII
a) the collet which is located around the blank (R) are opened and the blank is unloaded, and
b) the blank (R) or the complete contact element is raised and output from the rotary indexing machine.

4. Method for producing a contact element according to either of Claims 1 and 2,
wherein the blank is broken down into a plug region (SB) and a connection region (AB) in terms of process engineering,
wherein up to 3 working steps are carried out in parallel in the respective workstations (7-14):
in a first workstation I'
a) the blank (R) is inserted into the rotary indexing machine, grasped by an appropriate gripping tool, placed into a collet and
b) the blank (R) is clamped in in the collet,
in a second workstation II'
a) the blank is turned in the plug region, preferably to a diameter of 2.53 mm, and
b) the blank is centred,
in a third workstation III'
a) the plug region of the blank (R) is further turned, as a result of which the diameter is further reduced to two different diameter dimensions, preferably 1.585 mm and 2.45 mm, wherein a tolerance of +0.1 is possible in each case, and
b) axial drilling into the connection region of the blank (R) is performed,
in a fourth workstation IV'
a) the blank (R) is further turned in the plug region, as a result of which the diameter is uniformly reduced to preferably 1.585 mm, the blank (R) is bevelled to preferably 45° in a boundary section between the plug region and the connection region, and
b) axial drilling into the connection region of the blank is performed,
in a fifth workstation V'
a) the blank (R) is turned in the connection region below the bevelled boundary section, as a result of which the diameter is reduced to preferably 1.8 mm, and
b) axial drilling into the connection region of the blank (R) is performed,
in a sixth workstation VI'
a) (no working step)
b) the axial drilled hole of the blank (R) is reamed with a reaming tool in order to create a homogeneous opening, and
a) radial drilling into the connection region of the blank (R) is performed,
in a seventh workstation VII'
b) that end of the plug region which is remote from the connection region is conically reshaped and stop control or length control is carried out,
in an eighth workstation VIII'
a) the collet which is located around the blank (R) are opened and the blank is unloaded, and
b) the blank (R) or the complete contact element is raised and output from the rotary indexing machine.

5. Method for producing a contact element according to either of Claims 1 and 2,
wherein the blank (R) is broken down into a plug region (SB) and a connection region (AB) in terms of process engineering,
wherein up to 3 working steps are carried out in parallel in the respective workstations (23-24; 2-6):
in a first workstation I"
a) the blank (R) is inserted into the rotary indexing machine, grasped by an appropriate gripping tool, placed into a collet and
b) the blank (R) is clamped in in the collet,
in a second workstation II"
a) the blank (R) is turned in the plug region, preferably to a diameter of 2.53 mm, and
b) the blank (R) is centred,
in a third workstation III"
a) the plug region of the blank (R) is further turned, as a result of which the diameter is further reduced to two different diameter dimensions, preferably to 1.585 mm and to 2.45 mm, wherein a tolerance of +0.1 is possible in each case, and
in a fourth workstation IV"
a) the blank (R) is further turned in the plug region, as a result of which the diameter is uniformly reduced to preferably 1.585 mm, the blank (R) is bevelled to preferably 45° in a boundary section between the plug region and the connection region, and
b) axial drilling into the connection region of the blank (R) is performed,
in a fifth workstation V"
a) the blank (R) is turned in the connection region below the bevelled boundary section, as a result of which the diameter is reduced to preferably 1.8 mm, and
b) axial drilling into the connection region of the blank (R) is performed,
in a sixth workstation VI"
a) that end of the plug region which is remote from the connection region is conically reshaped and stop control or length control is carried out,
b) axial drilling into the connection region of the blank is performed,
in a seventh workstation VII'
a) (no working step)
b) the axial drilled hole of the blank (R) is reamed with a reaming tool in order to create a homogeneous opening, and
c) radial drilling into the connection region of the blank (R) is performed,
in an eighth workstation VIII'
a) the collet which is located around the blank (R) are opened and the blank (R) is unloaded, and
b) the blank or the complete contact element is raised and output from the rotary indexing machine.

## Revendications

1. Procédé de fabrication d'un élément de contact à l'aide d'une machine cadencée rotative, comprenant les étapes de fabrication suivantes :
- chargement de l'ébauche dans la machine cadencée rotative
- production d'une zone de broche ou d'une zone de douille destinée à la mise en contact électrique avec un autre élément de contact
- production d'une zone de calage destinée au calage de l'élément de contact dans un corps isolant
- production ou fabrication d'une zone de sertissage destinée au raccordement électrique d'un conducteur à l'élément de contact
- déchargement de l'élément de contact hors de la machine cadencée rotative
**caractérisé**
- **en ce que** la machine cadencée rotative possède au moins 24 stations de travail,
- **en ce que** l'élément de contact est fabriqué à partir d'une ébauche (R) qui, dans un cycle de production, traverse au moins 8 stations de travail (I-VIII, I'-VIII', I''-VIII'') sur la machine cadencée rotative,
- **en ce que** les stations de travail (I-VIII, I'-VIII', I''-VIII'') respectives réalisent la somme desdites étapes de fabrication et
**en ce que** trois cycles de production (A, B, C) sont exécutés simultanément sur la machine cadencée rotative.

2. Procédé de fabrication d'un élément de contact selon la revendication précédente, l'ébauche (R) étant un demi-produit qui est déjà passé par une étape d'usinage avant le chargement de l'ébauche (R) dans la machine cadencée rotative.

3. Procédé de fabrication d'un élément de contact selon l'une des revendications précédentes,
l'ébauche (R) étant, du point de vue de la technique du procédé, divisée en une zone d'enfichage (SB) et une zone de raccordement (AB),
jusqu'à 3 étapes de travail étant exécutées en parallèle dans les stations de travail (15-22) respectives :
dans une première station de travail I
a) l'ébauche (R) est introduite dans la machine cadencée rotative, saisie par un outil de préhension correspondant, introduite dans une pince de serrage et
b) l'ébauche (R) est serrée dans la pince de serrage
dans une deuxième station de travail II
a) l'ébauche (R) est tournée dans la zone d'enfichage, de préférence à un diamètre de 2,53 mm et
b) un centrage de l'ébauche (R) est effectué
dans une troisième station de travail III
a) le tournage de la zone d'enfichage de l'ébauche (R) se poursuit, moyennant quoi il se produit une réduction supplémentaire du diamètre à deux cotes de diamètre différentes, de préférence 1,585 mm et 2,45 mm, une surcote de +0,1 étant respectivement possible, et
b) un perçage axial vers l'intérieur est effectué dans la zone de raccordement de l'ébauche (R)
dans une quatrième station de travail IV
a) le tournage dans la zone d'enfichage de l'ébauche (R) se poursuit, moyennant quoi il se produit une réduction homogène du diamètre de préférence à 1,585 mm, l'ébauche (R) est chanfreinée de préférence à 45° dans une portion de délimitation entre la zone d'enfichage et la zone de raccordement, et
b) un perçage axial vers l'intérieur est effectué dans la zone de raccordement de l'ébauche (R)
dans une cinquième station de travail V
a) l'ébauche (R) est tournée dans la zone de raccordement au-dessous de la portion de délimitation chanfreinée, moyennant quoi le diamètre est réduit de préférence à 1,8 mm et
b) un perçage axial vers l'intérieur est effectué dans la zone de raccordement de l'ébauche (R)
dans une sixième station de travail VI
a) (aucune étape de travail)
b) le perçage axial de l'ébauche (R) est alésé avec un alésoir afin de produire une ouverture homogène et
c) un perçage axial vers l'intérieur est effectué dans la zone de raccordement de l'ébauche (R)
dans une septième station de travail VII
a) un façonnage conique de l'extrémité de la zone d'enfichage qui est éloignée de la zone de raccordement est réalisé, et un contrôle de butée ou un contrôle de longueur est effectué
dans une huitième station de travail VIII
a) la pince de serrage qui se trouve autour de l'ébauche (R) sont ouvertes et l'ébauche est déchargée et
b) l'ébauche (R) ou l'élément de contact terminé est soulevé(e) et délivré(e) hors de la machine cadencée rotative.

4. Procédé de fabrication d'un élément de contact selon l'une des revendications 1 et 2,
l'ébauche étant, du point de vue de la technique du procédé, divisée en une zone d'enfichage (SB) et une zone de raccordement (AB),
jusqu'à 3 étapes de travail étant exécutées en parallèle dans les stations de travail (7-14) respectives :
dans une première station de travail I'
a) l'ébauche (R) est introduite dans la machine cadencée rotative, saisie par un outil de préhension correspondant, introduite dans une pince de serrage et
b) l'ébauche (R) est serrée dans la pince de serrage
dans une deuxième station de travail II'
a) l'ébauche est tournée dans la zone d'enfichage, de préférence à un diamètre de 2,53 mm et
b) un centrage de l'ébauche est effectué
dans une troisième station de travail III'
a) le tournage de la zone d'enfichage de l'ébauche (R) se poursuit, moyennant quoi il se produit une réduction supplémentaire du diamètre à deux cotes de diamètre différentes, de préférence 1,585 mm et 2,45 mm, une surcote de +0,1 étant respectivement possible, et
b) un perçage axial vers l'intérieur est effectué dans la zone de raccordement de l'ébauche (R)
dans une quatrième station de travail IV'
a) le tournage dans la zone d'enfichage de l'ébauche (R) se poursuit, moyennant quoi il se produit une réduction homogène du diamètre de préférence à 1,585 mm, l'ébauche (R) est chanfreinée de préférence à 45° dans une portion de délimitation entre la zone d'enfichage et
la zone de raccordement, et
b) un perçage axial vers l'intérieur est effectué dans la zone de raccordement de l'ébauche
dans une cinquième station de travail V'
a) l'ébauche (R) est tournée dans la zone de raccordement au-dessous de la portion de délimitation chanfreinée, moyennant quoi le diamètre est réduit de préférence à 1,8 mm et
b) un perçage axial vers l'intérieur est effectué dans la zone de raccordement de l'ébauche (R)
dans une sixième station de travail VI'
a) (aucune étape de travail)
b) le perçage axial de l'ébauche (R) est alésé avec un alésoir afin de produire une ouverture homogène et
a) un perçage axial vers l'intérieur est effectué dans la zone de raccordement de l'ébauche (R) dans une septième station de travail VII'
b) un façonnage conique de l'extrémité de la zone d'enfichage qui est éloignée de la zone de raccordement est réalisé, et un contrôle de butée ou un contrôle de longueur est effectué
dans une huitième station de travail VIII'
a) la pince de serrage qui se trouve autour de l'ébauche (R) sont ouvertes et l'ébauche est déchargée et
b) l'ébauche (R) ou l'élément de contact terminé est soulevé(e) et délivré(e) hors de la machine cadencée rotative.

5. Procédé de fabrication d'un élément de contact selon l'une des revendications 1 et 2,
l'ébauche (R) étant, du point de vue de la technique du procédé, divisée en une zone d'enfichage (SB) et une zone de raccordement (AB),
jusqu'à 3 étapes de travail étant exécutées en parallèle dans les stations de travail (23-24 ; 2-6) respectives :
dans une première station de travail I''
a) l'ébauche (R) est introduite dans la machine cadencée rotative, saisie par un outil de préhension correspondant, introduite dans une pince de serrage et
b) l'ébauche (R) est serrée dans la pince de serrage
dans une deuxième station de travail II''
a) l'ébauche (R) est tournée dans la zone d'enfichage, de préférence à un diamètre de 2,53 mm et
b) un centrage de l'ébauche (R) est effectué
dans une troisième station de travail III"
a) le tournage de la zone d'enfichage de l'ébauche (R) se poursuit, moyennant quoi il se produit une réduction supplémentaire du diamètre à deux cotes de diamètre différentes, de préférence 1,585 mm et 2,45 mm, une surcote de +0,1 étant respectivement possible, et
dans une quatrième station de travail IV"
a) le tournage dans la zone d'enfichage de l'ébauche (R) se poursuit, moyennant quoi il se produit une réduction homogène du diamètre de préférence à 1,585 mm, l'ébauche (R) est chanfreinée de préférence à 45° dans une portion de délimitation entre la zone d'enfichage et la zone de raccordement, et
b) un perçage axial vers l'intérieur est effectué dans la zone de raccordement de l'ébauche (R)
dans une cinquième station de travail V"
a) l'ébauche (R) est tournée dans la zone de raccordement au-dessous de la portion de délimitation chanfreinée, moyennant quoi le diamètre est réduit de préférence à 1,8 mm et
b) un perçage axial vers l'intérieur est effectué dans la zone de raccordement de l'ébauche (R)
dans une sixième station de travail VI"
a) un façonnage conique de l'extrémité de la zone d'enfichage qui est éloignée de la zone de raccordement est réalisé, et un contrôle de butée ou un contrôle de longueur est effectué
b) un perçage axial vers l'intérieur est effectué dans la zone de raccordement de l'ébauche
dans une septième station de travail VII'
a) (aucune étape de travail)
b) le perçage axial de l'ébauche (R) est alésé avec un alésoir afin de produire une ouverture homogène et
c) un perçage axial vers l'intérieur est effectué dans la zone de raccordement de l'ébauche (R)
dans une huitième station de travail VIII'
a) la pince de serrage qui se trouve autour de l'ébauche (R) sont ouvertes et l'ébauche (R) est déchargée et
b) l'ébauche ou l'élément de contact terminé est soulevé(e) et délivré(e) hors de la machine cadencée rotative.
